# EUROPÄISCHE PATENTANMELDUNG

(11) **EP 2 535 221 A1**
(43) Veröffentlichungstag der Anmeldung: **19.12.2012**
(21) Anmeldenummer: 11169800.7
(22) Anmeldetag: 14.06.2011
(51) Int. Cl.: B60L 15/20, B60L 11/18

(54) **Ermitteln einer verfügbaren Leistung eines Fahrzeugs**

(71) Anmelder: Siemens Aktiengesellschaft, 80333 München (DE)
(72) Erfinder: Bittner, Roland, 91522 Ansbach (DE); Hösle, Markus, 91058 Erlangen (DE)

(57) **Zusammenfassung**

Die Verfügbarkeit der Leistung bzw. Energie eines Elektrofahrzeugs soll genauer ermittelt werden können. Dazu wird hier eine oder mehrere der Größen: Temperatur, Alter und/oder Lade-Entlade-Historie der Batterie (B) erfasst. Außerdem wird ein Zusammenhang zwischen einer der Größen und einer Energie- oder Leistungsabgabefähigkeit der Batterie (B) vorgegeben. Daraus und aus der erfassten Größe wird dann automatisch die zur Verfügung stehende Energie bzw. Leistung ermittelt.

## Beschreibung

Die vorliegende Erfindung betrifft ein Verfahren zum Ermitteln einer zur Verfügung stehenden Leistung oder Energie eines zumindest teilweise elektrisch angetriebenen Fahrzeugs, das einen Antriebsstrang einschließlich einer Batterie und eines Elektromotors aufweist. Darüber hinaus betrifft die vorliegende Erfindung ein Fahrzeug mit einem derartigen Antriebsstrang.

Die Erfindung lässt sich insbesondere für Kraftfahrzeuge anwenden, die rein elektrisch betrieben werden, aber auch für Fahrzeuge, die einen Hybridantrieb einschließlich Verbrennungsmotor und Elektromotor aufweisen. Dies gilt grundsätzlich unabhängig davon, ob als Energiequelle eine Hochvoltbatterie oder eine Niedervoltbatterie eingesetzt wird.

Aus der Druckschrift DE 60 2004 012 949 T2 ist eine Kühleinrichtung für eine elektrische Hochspannungseinheit für Kraftfahrzeuge und Hybridfahrzeuge bekannt. Darin ist der übliche Umstand erwähnt, dass eine Batterie und ein Wechselrichter bei Betrieb Wärme abgeben. Die Ladungs- und Entladungsleistung einer Batterie kann sich aufgrund hoher Temperatur verschlechtern. Auch der Wechselrichter weist eine zulässige Höchsttemperatur auf, und er kann beschädigt werden, wenn die Temperatur die zulässige Höchsttemperatur überschreitet. Daher wird eine entsprechende Kühlvorrichtung für die elektrische Hochspannungseinheit für den Motor des Fahrzeugs vorgesehen, welche ein Gebläse zum Fördern von Kühlluft aufweist. Des Weiteren sind geeignete Wärmeableiter vorgesehen.

Darüber hinaus beschreibt die Druckschrift
DE 20 2005 009 886 U1 ein Heizgerät für elektrische Speichervorrichtungen für Fahrzeuge. Es ist nämlich bekannt, dass gängige Elektro- und Hybridfahrzeuge in der Regel effektiv in gemäßigten und warmen Klimazonen betrieben werden können, weniger effektiv jedoch in extrem kalten Klimazonen. Der Grund hierfür besteht darin, dass Hochspannungsantriebsbatterien dazu neigen, bei einem Abfall der Temperatur der Batteriezellen (z.B. unter etwa 20°C) Energie zu verlieren. Dieser Energieverlust führt zu einer verminderten Fahrzeugleistung, erhöhtem Kraftstoffverbrauch und ungünstigerem Fahrverhalten.

Zudem hängt die Leistung, die von einer Batterie abgegeben werden kann, nicht nur von Umwelteinflüssen, wie der Temperatur, ab, sondern auch von der Historie, wie und wie oft die Batterie geladen und entladen wurde. Außerdem ist bekannt, dass die Kapazität einer Batterie allein durch das Alter der Batterie abnimmt.

Bei Elektrofahrzeugen und Hybridfahrzeugen wird der Ladezustand der Batterie in der Regel graphisch bzw. optisch im Fahrzeuginnenraum wiedergegeben. Dadurch hat der Betreiber des Fahrzeugs einen gewissen Anhaltspunkt, wie viel elektrische Energie ihm noch zur Verfügung steht, und wann er die Batterie wieder laden muss. Derartige Anzeigen sind jedoch gerade bei älteren Batterien wenig aussagekräftig, da die Anzeige meist auf der Basis einer Spannungsmessung erfolgt, und die Spannung bei älteren Batterien beispielsweise rascher einbricht als bei jüngeren Batterien.

Die Aufgabe der vorliegenden Erfindung besteht somit darin, den Betreiber eines Fahrzeugs besser über die Leistungsfähigkeit seines Fahrzeugs bzw. der Batterie informieren zu können.

Erfindungsgemäß wird diese Aufgabe gelöst durch ein Verfahren zum Ermitteln einer zur Verfügung stehenden Leistung oder Energie eines zumindest teilweise elektrisch angetriebenen Fahrzeugs, das einen Antriebsstrang einschließlich einer Batterie und eines Elektromotors aufweist, durch
- Erfassen einer oder mehrerer der Größen: Temperatur, Alter und/oder Lade-Entlade-Historie der Batterie,
- Vorgeben jeweils eines Zusammenhangs zwischen einer der Größen und einer Energie- oder Leistungsabgabefähigkeit der Batterie und
- automatisches Ermitteln der zur Verfügung stehenden Energie oder Leistung aus der erfassten Größe und dem vorgegebenen Zusammenhang bzw. den erfassten Größen und den vorgegebenen Zusammenhängen.

Darüber hinaus wird erfindungsgemäß bereitgestellt ein Fahrzeug mit
- einem Antriebsstrang einschließlich einer Batterie und eines Elektromotors,
- eine Erfassungseinrichtung zum Erfassen einer oder mehrerer der Größen: Temperatur, Alter und/oder Lade-Entlade-Historie der Batterie,
- eine Speichereinrichtung zum Bereitstellen jeweils eines vorgegebenen Zusammenhangs zwischen einer der Größen und einer Energie- oder Leistungsabgabefähigkeit der Batterie und
- eine Recheneinrichtung zum automatischen Ermitteln einer zur Verfügung stehenden Energie oder Leistung aus der erfassten Größe und dem vorgegebenen Zusammenhang bzw. den erfassten Größen und den vorgegebenen Zusammenhängen.

In vorteilhafter Weise wird also die Leistung oder Energie, die eine Batterie zur Verfügung stellen kann, in Abhängigkeit von der Temperatur, dem Alter und/oder der Lade-Entlade-Historie der Batterie automatisch ermittelt. Es wird also nicht nur ein einziger Spannungswert gemessen, der den Ladezustand der Batterie wiedergeben soll. Vielmehr wird tatsächlich berücksichtigt, inwieweit sich die aktuelle Temperatur auf die verfügbare Leistung bzw. Energie auswirkt. Alternativ oder zusätzlich wird berücksichtigt, wie alt die Batterie ist. Für die zur Verfügung stehende Energie oder Leistung kann alternativ oder zusätzlich auch die Historie der Batterie (insbesondere die Anzahl der Lade- und Entladezyklen) berücksichtigt werden. Damit ergibt sich für den Betreiber des Fahrzeugs eine deutlich aussagekräftigere Information über den Zustand bzw. die Kapazität der Batterie.

In einer vorteilhaften Ausgestaltung wird eine Energie oder Leistung für einen Überholvorgang berechnet oder vorgegeben, und es wird in dem Fahrzeug angezeigt, ob die zur Verfügung stehende Energie oder Leistung für den Überholvorgang genügt. Dem Fahrer wird also hierdurch Information bereitgestellt, die ihn leichter einschätzen lässt, ob der gewünschte Fahrvorgang von energetischer Seite her überhaupt möglich ist.

Gemäß einer weiteren bevorzugten Ausführungsform kann berechnet und im Fahrzeug angezeigt werden, welche Leistung über einen bestimmten Zeitraum zur Verfügung steht. So kann sich der Fahrer beispielsweise bei einer größeren Fahrstrecke die dem Fahrzeug abverlangte Leistung besser einteilen.

Ferner kann gemäß einer anderen Ausführungsform berechnet und im Fahrzeug angezeigt werden, wie lange das Fahrzeug mit der zur Verfügung stehenden Leistung in einem Überlastbetrieb betrieben werden kann, in dem die Leistung über einer vorgegebenen Dauerleistung liegt. Damit kann der Betreiber des Fahrzeugs speziell auch für einen Überholvorgang oder einen Anfahrvorgang abschätzen, ob die erforderliche Leistung auch tatsächlich verfügbar ist.

Des Weiteren kann in dem Fahrzeug berechnet und angezeigt werden, wann in Abhängigkeit von einer aktuellen Leistung des Fahrzeugs und der zur Verfügung stehenden Leistung eine Reduzierung der aktuellen Leistung entsprechend einem vorgegebenen Kriterium notwendig ist. Dies hat den Vorteil, dass der Fahrer bzw. Betreiber des Fahrzeugs leichter einschätzen kann, welche Auswirkungen eine aktuelle Leistungsentnahme für den zukünftigen Betrieb des Fahrzeugs hat. Insbesondere kann der Fahrer so das Fahrzeug ressourcenschonender betreiben.

Die Reduzierung der Leistung kann dem Fahrer empfohlen werden, sie kann aber auch automatisch erfolgen. Letzteres hat insbesondere bei weniger kritischen Fahrmanövern den Vorteil, dass unter Umständen eine höhere Reichweite mit dem Fahrzeug erzielt werden kann als ohne Reduzierung der Leistung.

Ferner kann die Batterie für ein Fahrmanöver speziell gekühlt oder geheizt werden, um die Leistungsabgabe vorübergehend zu steigern. Eine derartige Heiz- oder Kühlmaßnahme wird dann vorteilhafterweise berücksichtigt, wenn die zur Verfügung stehende Leistung bzw. Energie berechnet und angezeigt wird.

Des Weiteren kann in dem Fahrzeug berechnet und angezeigt werden, welche Reichweite das Fahrzeug in Abhängigkeit von den erfassten Größen besitzt. Die Reichweite des Fahrzeugs kann somit sehr genau bestimmt werden, da eben die speziellen Parameter wie Temperatur, Alter und Lade-Entlade-Historie der Batterie in die Abschätzung Eingang finden.

Die vorliegende Erfindung wird nun anhand der beigefügten Zeichnungen näher erläutert, in denen zeigen:
- FIG 1: ein prinzipielles Schaltdiagramm einer Vorrichtung eines Fahrzeugs, mit der die zur Verfügung stehende Leistung oder Energie einer Batterie ermittelt werden kann, und
- FIG 2: eine Ansicht eines einfachen Anzeigeelements zur Darstellung einer verfügbaren Leistung und zur Anzeige der Durchführbarkeit eines Überholvorgangs.

Die nachfolgend näher geschilderten Ausführungsbeispiele stellen bevorzugte Ausführungsformen der vorliegenden Erfindung dar.

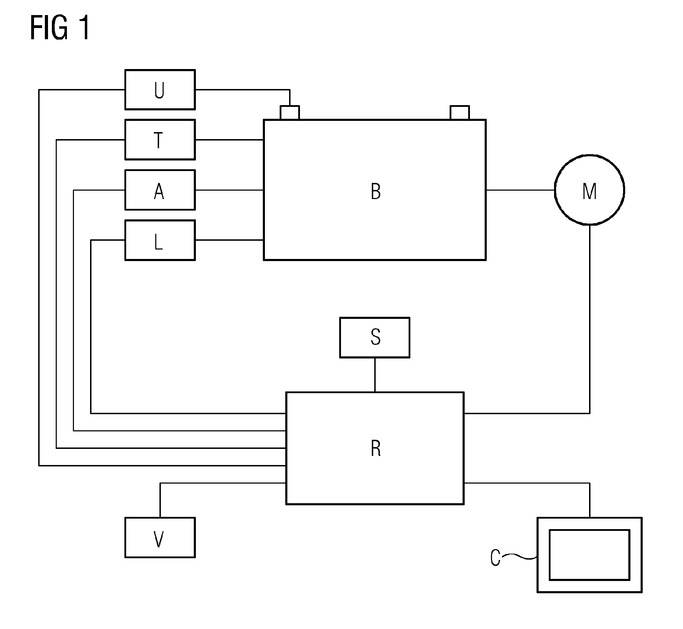

In dem Beispiel von FIG 1 ist der Antriebsstrang eines Fahrzeugs symbolhaft durch eine Batterie B und einen Motor M dargestellt. Ein derartiger Antriebsstrang befindet sich z.B. in einem Elektrofahrzeug oder einem Hybridfahrzeug. Etwaige Steuerelemente des Motors werden hier als Teil des Motors betrachtet.

Die Leistung und die Energieverfügbarkeit eines Elektrofahrzeugs oder eines Hybridfahrzeugs hängen wesentlich von Umwelteinflüssen, insbesondere der Temperatur, ab. Je niedriger die Temperatur der Batterie ist, desto geringer ist üblicherweise ihre Kapazität. So steht für manche Batterien bei -18°C nur noch etwa die Hälfte der normalen Batteriekapazität zur Verfügung.

Weiterhin nimmt die Kapazität einer Batterie B mit dem Alter ab. Dies liegt an elektrochemischen Prozessen, die die Komponenten der Batterie verändern.

Zudem hängt die Batteriekapazität auch von der Art und Häufigkeit der Ladezyklen ab. Die Art und Häufigkeit des Ladens und Entladens der Batterie ergibt eine individuelle Historie einer Batterie. Diese bestimmt maßgeblich, welche Leistung bzw. Energie von einer Batterie zur Verfügung gestellt werden kann. Insgesamt wird die Zyklusfestigkeit von Batterien zwar ständig verbessert, aber sie stellt je nach Art der Batterie einen mehr oder weniger großen Einflussfaktor auf die Batteriekapazität dar.

Gemäß dem Beispiel von FIG 1 ist an die Batterie B ein Temperatursensor T angeschlossen, der die Temperatur der Batterie misst. Diese kann bei Betriebsbeginn der Umgebungstemperatur entsprechen, sie steigt aber üblicherweise beim Betrieb des Fahrzeugs.

Das Temperatursignal von dem Temperatursensor T wird an eine Recheneinrichtung R übertragen. Zusätzlich erhält die Recheneinheit R beispielsweise mithilfe eines Spannungsmessers U indirekt eine Information über den Ladezustand der Batterie. Aussagen über den Ladezustand der Batterie bzw. deren Energie können auch über andere Methoden gewonnen werden (z. B. Shunt-Widerstand oder dergleichen).

Die Recheneinheit R hat beispielsweise Zugriff auf eine Speichereinheit S, in der eine Kennlinie oder ein Look-up-Table für die Abhängigkeit der Batteriekapazität und der Temperatur gespeichert ist. Ermittelt die Recheneinheit R somit indirekt aus der gemessenen Spannung einen Schätzwert für den Ladezustand, so wird dieser Schätzwert mithilfe der in der Speichereinrichtung S hinterlegten Temperaturkennlinie präzisiert. Der resultierende Wert für den Ladezustand repräsentiert einen Energieinhalt. Ob diese Energie auch tatsächlich zur Verfügung steht, muss unter Umständen eigens bewertet werden. Insbesondere kann diese Verfügbarkeit auch von der Temperatur abhängen. Soll also die Energieverfügbarkeit in einer Anzeige des Fahrzeugs, z.B. an dem Kombiinstrument C, dargestellt werden, so ist die entsprechende Temperaturabhängigkeit zu berücksichtigen. Auch dies kann in der Speichereinheit S hinterlegt sein.

Weniger von Interesse für den Fahrer ist meist wie viel Energie insgesamt durch die Batterie B zur Verfügung gestellt werden kann. Der Fahrer will häufiger wissen, welche Leistung ihm zur Verfügung steht. Dies bedeutet, dass er wissen muss, wie viel Energie pro Zeiteinheit vom Fahrzeug aufgebracht werden kann. Ein Maß hierfür kann die Leistung sein, die von der Batterie zur Verfügung gestellt werden kann (ohne Verluste von Schaltung, Getriebe und Motor). Daher können in der Speichereinrichtung S auch Kennlinien hinterlegt sein, die in Abhängigkeit von der gemessenen Batteriespannung und/oder der Temperatur der Batterie einen Wert für eine verfügbare Leistung der Batterie liefern.

Mit dem Alter der Batterie B nimmt auch deren Kapazität ab. Daher wird im vorliegenden Ausführungsbeispiel neben der Temperatur und der Spannung der Batterie auch das Alter der Batterie erfasst. Hierzu ist allgemein ein Alterungssensor A verwendet, der das Alter der Batterie bestimmt bzw. einen entsprechenden Wert bereitstellt. Der Alterungssensor A dient also als Erfassungseinrichtung für das Alter bzw. die Einsatzdauer der Batterie B. Im einfachsten Fall handelt es sich dabei um einen Zeitzähler, der die Zeit zählt, seitdem die Batterie B im Einsatz bzw. in Betrieb ist. In diesem Fall ist es nicht notwendig, dass diese Alterserfassungseinrichtung an die Batterie B angeschlossen ist, sondern es genügt dann, dass diese Einrichtung einen entsprechenden Wert für die Recheneinrichtung R zur Verfügung stellt.

Anhand einer Kennlinie, die wiederum analytisch oder als Tabelle vorliegen kann, kann anhand des Alters der Batterie B ein korrespondierender Kapazitätswert und damit eine mögliche verfügbare Leistungs- oder Energiemenge eben auch in Abhängigkeit des Alters ermittelt werden.

An die Batterie B kann auch ein Ladesensor L angeschlossen sein. Dieser ermittelt beispielsweise die Anzahl der Ladezyklen, d. h. wie oft die Batterie entladen und geladen worden ist. Dabei kann unter Umständen auch erfasst werden, wie stark die Batterie beim jeweiligen Lade- bzw. Entladezyklus geladen bzw. entladen worden ist. Es ergibt sich daraus eine Historie des Ladens, die ebenfalls für die Recheneinrichtung R bereitgestellt werden kann.

Die aktuelle Batteriekapazität hängt von der Historie der Lade- und Entladezyklen ab. Entsprechende Kennlinien können wiederum analytisch oder in Form von Tabellen in der Speichereinrichtung S gespeichert sein. Somit lässt sich eine aktuelle Batteriekapazität, eine aktuell verfügbare Energiemenge oder eine maximal entnehmbare Leistung auch in Abhängigkeit von der Historie des Ladens bestimmen.

Die aus der Batterie B entnommene Leistung kann aus der Batteriespannung und der dem Motor M gelieferten Stromstärke berechnet werden. Die tatsächliche Leistung des Fahrzeugs (Antriebsleistung) unterscheidet sich jedoch von der Batterieleistung. Unter Umständen ist es für den Fahrer günstiger, die Antriebsleistung zu kennen. Ggf. sind daher weitere Sensoren notwendig, um kinetische Größen des Fahrzeugs zu ermitteln. Im vorliegenden Beispiel wird stellvertretend dafür ein Geschwindigkeitsmesser V eingesetzt, um etwaige notwenige kinetische Größen zu liefern.

Für den Fahrer ist es aber weniger von Bedeutung, wie groß die aktuelle zur Verfügung stehende Leistung der Batterie bzw. des Fahrzeugs ist, sondern es ist eine Vorhersage der maximal zur Verfügung stehenden Leistung oder einer Dauerleistung von Bedeutung. Daher werden hier Daten über Umwelteinflüsse (z.B. Temperatur) und über die Historie der Batterie (z.B. Ladezyklen, Ladezustand, Alter) gesammelt und ausgewertet. Diese Größen haben erfahrungsgemäß einen Einfluss auf die Batteriekapazität, sodass sich damit eine verfügbare Energie bzw. Leistung des elektronisch angetriebenen Fahrzeugs für die Zukunft ermitteln lässt. Entsprechende Werte können dann dem Fahrer beispielsweise auf dem Kombiinstrument C angezeigt werden.

Eine derartige Schätzung der zur Verfügung stehenden Leistung bzw. Energie kann dazu verwendet werden, um abzuschätzen, ob ein Überholvorgang durchgeführt werden kann. Dies hängt zum einen von der aktuellen Fahrgeschwindigkeit und zum anderen von der verfügbaren Leistung des Fahrzeugs ab. Mit dem oben vorgestellten System kann diesbezüglich eine Abschätzung durchgeführt werden. FIG 2 zeigt ein Beispiel, wie ein Fahrer über die Durchführbarkeit eines Überholvorgangs informiert werden kann. Das Kombiinstrument C zeigt ihm beispielsweise eine Leistung P an, die ihm in den nächsten Minuten maximal zur Verfügung steht. Im vorliegenden Fall sind dies 75 PS. Gleichzeitig gibt dem Fahrer die Recheneinrichtung R über die Anzeige C an, ob der Überholvorgang durchgeführt werden kann. Im vorliegenden Beispiel wird das durch die Anzeige "OK" bejaht.

Das obige System bzw. Verfahren kann aber auch dazu genutzt werden, um zu berechnen bzw. anzuzeigen, welche Leistung über einen bestimmten Zeitraum zur Verfügung steht. So kann beispielsweise ein Zeitraum angegeben werden, in dem das Fahrzeug in Überlast betrieben werden kann. Dies wäre insbesondere für einen Überholvorgang hilfreich.

Grundsätzlich ist es nämlich von Vorteil, wenn ein Motormanagement vorhanden ist, welches einen Betrieb des Elektromotors in Überlast zeitweise ermöglicht. Dem Fahrer kann dann beispielsweise auch angezeigt werden, wann eine Leistungsreduzierung notwendig ist (z.B. in einer Minute oder in 3 Minuten). Alternativ kann der Fahrer auch darüber informiert werden, wann eine automatische Reduzierung der Leistung erfolgt, wobei dies auch in Stufen erfolgen kann.

Für die Ermittlung der zur Verfügung stehenden Leistung bzw. Energie können auch Sondermaßnahmen berücksichtigt werden, die die Leistung einer Batterie kurzfristig erhöhen. Dies ist beispielsweise für eine Bergfahrt oder für einen Überholvorgang von Bedeutung. So kann beispielsweise der Stromrichter und/oder der Elektromotor kurzzeitig zusätzlich gekühlt werden. Beispielsweise lässt sich eine derartige Kühlung durch Entspannung komprimierter Luft kurzzeitig realisieren.

Die ermittelte, zur Verfügung stehende Leistung bzw. Energie kann auch dazu verwendet werden, um die Reichweite des Fahrzeugs zu berechnen bzw. anzuzeigen. Da hier auch Umweltparameter wie die Temperatur oder Betriebsparameter wie die Historie der Ladezyklen erfasst werden, kann die Reichweite auch in Abhängigkeit von diesen Parametern konkret für den Einzelfall abhängig von diesen Parametern ermittelt werden.

## Patentansprüche

1. Verfahren zum Ermitteln einer zur Verfügung stehenden Leistung oder Energie eines zumindest teilweise elektrisch angetriebenen Fahrzeugs, das einen Antriebsstrang einschließlich einer Batterie (B) und eines Elektromotors (M) aufweist, **gekennzeichnet durch**
- Erfassen einer oder mehrerer der Größen: Temperatur, Alter und/oder Lade-Entlade-Historie der Batterie,
- Vorgeben jeweils eines Zusammenhangs zwischen einer der Größen und einer Energie- oder Leistungsabgabefähigkeit der Batterie und
- automatisches Ermitteln der zur Verfügung stehenden Energie oder Leistung aus der erfassten Größe und dem vorgegebenen Zusammenhang bzw. den erfassten Größen und den vorgegebenen Zusammenhängen.

2. Verfahren nach Anspruch 1, wobei eine Energie oder Leistung für einen Überholvorgang berechnet oder vorgegeben wird, und im Fahrzeug angezeigt wird, ob die zur Verfügung stehende Energie oder Leistung für den Überholvorgang genügt.

3. Verfahren nach Anspruch 1 oder 2, wobei berechnet und in dem Fahrzeug angezeigt wird, welche Leistung über einen bestimmbaren Zeitraum zur Verfügung steht.

4. Verfahren nach einem der vorhergehenden Ansprüche, wobei berechnet und in dem Fahrzeug angezeigt wird, wie lange das Fahrzeug mit der zur Verfügung stehenden Leistung in einem Überlastbetrieb betrieben werden kann, in dem die Leistung über einer vorgegebenen Dauerleistung liegt.

5. Verfahren nach einem der vorhergehenden Ansprüche, wobei berechnet und in dem Fahrzeug angezeigt wird, wann in Abhängigkeit von einer aktuellen Leistung des Fahrzeugs und der zur Verfügung stehenden Leistung eine Reduzierung der aktuellen Leistung entsprechend einem vorgegebenen Kriterium notwenig ist.

6. Verfahren nach Anspruch 5, wobei die Reduzierung der Leistung automatisch erfolgt.

7. Verfahren nach einem der vorhergehenden Ansprüche, wobei die Batterie für ein Fahrmanöver speziell gekühlt oder geheizt wird, um die Leistungsabgabe vorübergehend zu steigern.

8. Verfahren nach einem der vorhergehenden Ansprüche, wobei berechnet und in dem Fahrzeug angezeigt wird, welche Reichweite das Fahrzeug in Abhängigkeit von den erfassten Größen besitzt.

9. Fahrzeug mit
- einem Antriebsstrang einschließlich einer Batterie (B) und eines Elektromotors (M),
**gekennzeichnet durch**
- eine Erfassungseinrichtung (T, A, L) zum Erfassen einer oder mehrerer der Größen: Temperatur, Alter und/oder Lade-Entlade-Historie der Batterie,
- eine Speichereinrichtung (S) zum Bereitstellen jeweils eines vorgegebenen Zusammenhangs zwischen einer der Größen und einer Energie- oder Leistungsabgabefähigkeit der Batterie (B) und
- eine Recheneinrichtung (R) zum automatischen Ermitteln einer zur Verfügung stehenden Energie oder Leistung aus der erfassten Größe und dem vorgegebenen Zusammenhang bzw. den erfassten Größen und den vorgegebenen Zusammenhängen.

## Geänderte Patentansprüche

### Geänderte Patentansprüche gemäss Regel 137(2) EPÜ.

**1.** Verfahren zum Ermitteln einer zur Verfügung stehenden Leistung oder Energie eines zumindest teilweise elektrisch angetriebenen Fahrzeugs, das einen Antriebsstrang einschließlich einer Batterie (B) und eines Elektromotors (M) aufweist, wobei das Verfahren folgende Schritte umfasst:
- Erfassen einer oder mehrerer der Größen: Temperatur, Alter und/oder Lade-Entlade-Historie der Batterie,
- Vorgeben jeweils eines Zusammenhangs zwischen einer der Größen und einer Energie- oder Leistungsabgabefähigkeit der Batterie und
- automatisches Ermitteln der zur Verfügung stehenden Energie oder Leistung aus der erfassten Größe und dem vorgegebenen Zusammenhang bzw. den erfassten Größen und den vorgegebenen Zusammenhängen;
**dadurch gekennzeichnet, dass** für das Ermitteln der zur Verfügung stehenden Energie bzw. Leistung Sondermaßnahmen berücksichtigt werden, die eine Leistung der Batterie erhöhen.

**2.** Verfahren nach Anspruch 1, wobei eine Energie oder Leistung für einen Überholvorgang berechnet oder vorgegeben wird, und im Fahrzeug angezeigt wird, ob die zur Verfügung stehende Energie oder Leistung für den Überholvorgang genügt.

**3.** Verfahren nach Anspruch 1 oder 2, wobei berechnet und in dem Fahrzeug angezeigt wird, welche Leistung über einen bestimmbaren Zeitraum zur Verfügung steht.

**4.** Verfahren nach einem der vorhergehenden Ansprüche, wobei berechnet und in dem Fahrzeug angezeigt wird, wie lange das Fahrzeug mit der zur Verfügung stehenden Leistung in einem Überlastbetrieb betrieben werden kann, in dem die Leistung über einer vorgegebenen Dauerleistung liegt.

**5.** Verfahren nach einem der vorhergehenden Ansprüche, wobei berechnet und in dem Fahrzeug angezeigt wird, wann in Abhängigkeit von einer aktuellen Leistung des Fahrzeugs und der zur Verfügung stehenden Leistung eine Reduzierung der aktuellen Leistung entsprechend einem vorgegebenen Kriterium notwenig ist.

**6.** Verfahren nach Anspruch 5, wobei die Reduzierung der Leistung automatisch erfolgt.

**7.** Verfahren nach einem der vorhergehenden Ansprüche, wobei die Batterie für ein Fahrmanöver speziell gekühlt oder geheizt wird, um die Leistungsabgabe vorübergehend zu steigern.

**8.** Verfahren nach einem der vorhergehenden Ansprüche, wobei berechnet und in dem Fahrzeug angezeigt wird, welche Reichweite das Fahrzeug in Abhängigkeit von den erfassten Größen besitzt.

**9.** Fahrzeug mit
- einem Antriebsstrang einschließlich einer Batterie (B) und eines Elektromotors (M),einer Erfassungseinrichtung (T, A, L) zum Erfassen einer oder mehrerer der Größen: Temperatur, Alter und/oder Lade-Entlade-Historie der Batterie,
- einer Speichereinrichtung (S) zum Bereitstellen jeweils eines vorgegebenen Zusammenhangs zwischen einer der Größen und einer Energie- oder Leistungsabgabefähigkeit der Batterie (B) und
- einer Recheneinrichtung (R) zum automatischen Ermitteln einer zur Verfügung stehenden Energie oder Leistung aus der erfassten Größe und dem vorgegebenen Zusammenhang bzw. den erfassten Größen und den vorgegebenen Zusammenhängen, **dadurch gekennzeichnet, dass** für das Ermitteln der zur Verfügung stehenden Energie bzw. Leistung vorgesehen ist, Sondermaßnahmen zu berücksichtigen, die eine Leistung der Batterie erhöhen.

**1.** Verfahren zum Ermitteln einer zur Verfügung stehenden Leistung oder Energie eines zumindest teilweise elektrisch angetriebenen Fahrzeugs, das einen Antriebsstrang einschließlich einer Batterie (B) und eines Elektromotors (M) aufweist, wobei das Verfahren durch folgende Schritte **gekennzeichnet** ist:
- Erfassen einer oder mehrerer der Größen: Temperatur, Alter und/oder Lade-Entlade-Historie der Batterie,
- Vorgeben jeweils eines Zusammenhangs zwischen einer der Größen und einer Energie- oder Leistungsabgabefähigkeit der Batterie und
- automatisches Ermitteln der zur Verfügung stehenden Energie oder Leistung aus der erfassten Größe und dem vorgegebenen Zusammenhang bzw. den erfassten Größen und den vorgegebenen Zusammenhängen, wobei eine Energie oder Leistung für einen Überholvorgang berechnet oder vorgegeben wird, und im Fahrzeug angezeigt wird, ob die zur Verfügung stehende Energie oder Leistung für den Überholvorgang genügt;
**dadurch gekennzeichnet, dass** eine Abschätzung, ob der Überholvorgang durchgeführt werden kann, in Abhängigkeit von der aktuellen Fahrzeuggeschwindigkeit und der verfügbaren Leistung des Fahrzeugs durchgeführt wird.

**2.** Verfahren nach Anspruch 1, wobei berechnet und in dem Fahrzeug angezeigt wird, welche Leistung über einen bestimmbaren Zeitraum zur Verfügung steht.

**3.** Verfahren nach einem der vorhergehenden Ansprüche, wobei berechnet und in dem Fahrzeug angezeigt wird, wie lange das Fahrzeug mit der zur Verfügung stehenden Leistung in einem Überlastbetrieb betrieben werden kann, in dem die Leistung über einer vorgegebenen Dauerleistung liegt.

**4.** Verfahren nach einem der vorhergehenden Ansprüche, wobei berechnet und in dem Fahrzeug angezeigt wird, wann in Abhängigkeit von einer aktuellen Leistung des Fahrzeugs und der zur Verfügung stehenden Leistung eine Reduzierung der aktuel-len Leistung entsprechend einem vorgegebeben Kriterium notwenig ist.

**5.** Verfahren nach Anspruch 4, wobei die Reduzierung der Leistung automatisch erfolgt.

**6.** Verfahren nach einem der vorhergehenden Ansprüche, wobei die Batterie für ein Fahrmanöver speziell gekühlt oder geheizt wird, um die Leistungsabgabe vorübergehend zu steigern.

**7.** Verfahren nach einem der vorhergehenden Ansprüche, wobei berechnet und in dem Fahrzeug angezeigt wird, welche Reichweite das Fahrzeug in Abhängigkeit von den erfassten Größen besitzt.

**8.** Fahrzeug mit
- einem Antriebsstrang einschließlich einer Batterie (B) und eines Elektromotors (M),
- einer Erfassungseinrichtung (T, A, L) zum Erfassen einer oder mehrerer der Größen: Temperatur, Alter und/oder Lade-Entlade-Historie der Batterie,
- einer Speichereinrichtung (S) zum Bereitstellen jeweils eines vorgegebenen Zusammenhangs zwischen einer der Größen und einer Energie- oder Leistungsabgabefähigkeit der Batterie (B) und
- einer Recheneinrichtung (R) zum automatischen Ermitteln einer zur Verfügung stehenden Energie oder Leistung aus der erfassten Größe und dem vorgegebenen Zusammenhang bzw. den erfassten Größen und den vorgegebenen Zusammenhängen, wobei eine Berechnung oder ein Vorgeben einer Energie oder Leistung für einen Überholvorgang vorgesehen ist, und im Fahrzeug eine Anzeige vorgesehen ist, ob die zur Verfügung stehende Energie oder Leistung für den Überholvorgang genügt; **dadurch gekennzeichnet, dass** eine Abschätzung, ob der Überholvorgang durchgeführt werden kann, in Abhängigkeit von der aktuellen Fahrzeuggeschwindigkeit und der verfügbaren Leistung des Fahrzeugs vorgesehen ist.
